# EUROPEAN PATENT APPLICATION

(11) **EP 0 887 457 A2**
(43) Date of publication of application: **30.12.1998**
(21) Application number: 97310593.5
(22) Date of filing: 24.12.1997
(51) Int. Cl.: D06F 37/22, D06F 37/24

(54) **A method of and apparatus for expelling residual water from a counterbalancing device for a washing machine**

(30) Priority: 26.06.1997 KR 9727513; 30.06.1997 KR 9728877
(71) Applicant: Samsung Electronics Co., Ltd., Suwon City, Kyungki-do (KR)
(72) Inventor: Han, Woo-jeong, Bundang-gu, Sungnam-city, Kyungki-do (KR); Kim,Jae-sin, Paldal-gu, Suwon-city, Kyungki-do (KR)
(74) Representative: Read, Matthew Charles

(57) **Abstract**

A method and apparatus for expelling residual water from a counterbalancing device (20) of a drum washing machine is disclosed. The water is present in the counterbalancing device (20) following manufacture as it is used to cool the device during assembly by welding. To remove the residual water, which can cause oxidation and rust, air is passed through the balancing device to blow it out.

## Description

The present invention relates to a method of, and apparatus for, expelling residual water from a counterbalancing device of a drum washing machine.

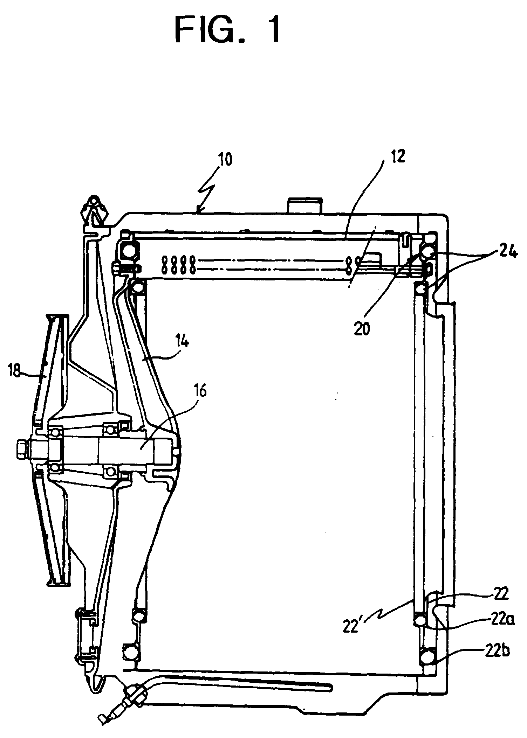

A conventional drum washing machine is illustrated in Figure 1 and includes a tub 10 having a drum 12 rotatably mounted therein for receiving laundry. A rear cover 14 is bolted to the drum 12 and the drum 12 is driven by a motor (not shown) mounted beneath the tub 10.

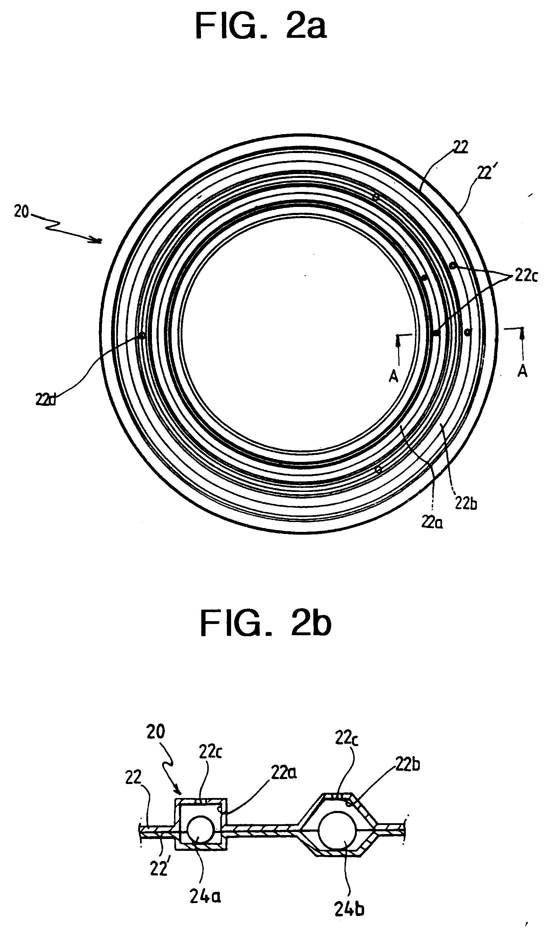

One end of the shaft 16 is press-fitted into an aperture in the centre of the rear cover 14 and the other end is press-fitted into a pulley 18 carrying a belt which is rotatably driven by the motor. Ball balancers 20 (shown in Figures 2a and 2b) are mounted on the front and rear surfaces of the drum 12 to absorb vibration and noise generated when the drum 12 rotates.

Each of the ball balancers 20 includes a pair of drum covers 22 and 22' defining radially inner and outer races 22a and 22b each having balls 24a,24b of different diameters disposed therein. Oil filling holes 22c for introducing oil into the inner and outer races 22a and 22b are provided in one of the drum covers 22 to minimize friction generated between the balls 24 and the races 22a and 22b.

The drum covers 22 and 22' are conventionally manufactured by seam welding in which the balls 24a,24b are placed in the portions of the inner and outer races 22a and 22b formed in the drum cover 22' the drum cover 22 is then laid on top of the drum cover 22' and is retained in position and fastened to the drum cover 22' by seam welding.

To prevent movement of the drum cover 22 during the seam welding process the drum covers 22 and 22' are first spot-welded at three points before seam welding is begun.

A disadvantage with the aforementioned process is that cooling water required to cool the ball balancers during seam welding collects and remains in the inner and outer races eventually causing the balls to oxidise and rust. This inhibits the performance of the washing machine and prevents the vibration and noise generated during rotation of the drum from being effectively absorbed.

It is an object of the present invention to overcome or substantially alleviate the aforementioned problem and provide an apparatus for removing all or substantially all the residual water from the ball balancers of a drum washing machine.

A method of expelling residual water from a counterbalancing device for a drum washing machine according to the present invention is characterised by the step of passing air through the counterbalancing device to blow out the residual water.

Preferably, the method includes the step of clamping the counterbalancing device in a jig such that a first hole in the counterbalancing device is aligned with an air nozzle on the jig.

In a preferred embodiment, the method includes the step of applying a vacuum source to the counterbalancing device to draw the residual water therefrom.

A method of manufacturing a counterbalancing device for a drum washing machine according to the present invention, is characterised by the steps of:
a) placing counterbalance means in a channel formed in a first drum cover;
b) laying a second drum cover having a second channel over the first drum cover such that the first and second channels are aligned and together form an enclosed chamber containing the counterbalance means;
c) seam welding the first and second drum covers together whilst applying water to cool the drum covers;
d) expelling residual cooling water from the chamber, and
e) injecting oil into the chamber to reduce friction between the counterbalance means and the chamber during operation of the counterbalance device.

Preferably, the method of manufacturing a counterbalancing device includes the step of spot welding the drum covers together to hold them in position before commencing the seam welding step.

Apparatus according to the present invention is characterised by means for passing air through the counterbalancing device to blow out the residual water.

Preferably means for clamping the counterbalancing device in a jig are provided such that a first hole in the counterbalancing device is aligned with an air nozzle on the jig.

In the preferred embodiment the air nozzle received in a passage in the jig and is slidable into communication with the first hole in the counterbalancing device.

The apparatus preferably includes a vacuum source to draw the residual water from the counterbalancing device.

Embodiments of the present invention will now be described, by way of example only, with reference to the accompanying drawings, in which:
Figure 1 is a sectional view for schematically showing the inner structure of a conventional drum washing machine;
Figure 2a is a top view for showing ball balancers mounted to the conventional washing machine of Figure 1;
Figure 2b is a sectional view of the ball balancers taking along line A-A of Figure 2a;
Figure 3 is a perspective view of an apparatus for removing residual water from ball balancers of a drum washing machine according to a preferred embodiment of the present invention;
Figure 4 is a side sectional view illustrating a fixing jig for fixing the ball balancers to the apparatus according to a preferred embodiment of the present invention;
Figure 5 is a front sectional view for illustrating how the residual water is removed from the ball balancer according to a preferred embodiment of the present invention;
Figure 5a is an enlarged fragmentary view of the circled portion of Figure 5;
Figure 6 is a perspective view of a second embodiment of an air nozzle according to a preferred embodiment of the present invention; and
Figure 7 is an enlarged sectional view of the filling structure of the air nozzle taken along line B-B of Figure 6.

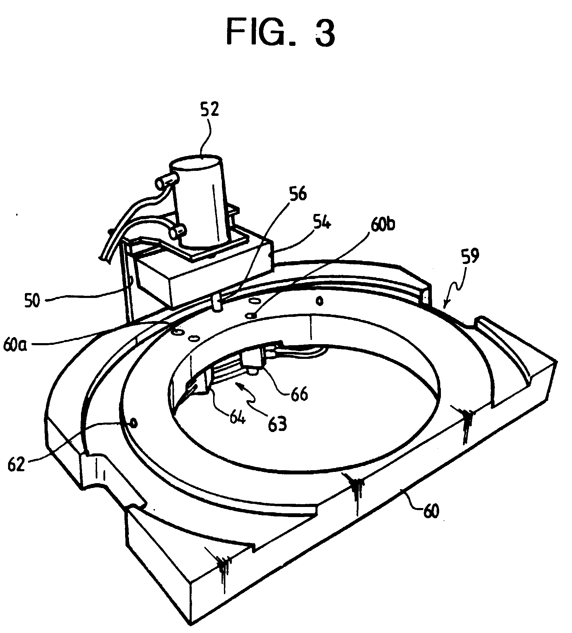

Referring to Figure 3, the apparatus for removing residual water from a ball balancer of a washing machine includes a plate 59 on which a seam-welded ball balancer 20 (not shown in Figure 3) may be mounted, an air cylinder 52 mounted on a support 50 that extends upwardly from one side of the plate 59, and a device 63 for removing residual water from the ball balancer mounted on the underside of the support 50. The device 63 removes the small amount of cooling water remaining in the inner and outer races 22a and 22b and on surfaces of balls 24a,24b after seam welding has been completed.

The air cylinder 52 has a piston rod 56 on which is mounted a fixing jig 54 which is movable into engagement with the ball balancer 20 to prevent it from moving and guide bars 56' for guiding the fixing jig 54 into engagement with a ball balancer are mounted on the support 50.

The plate 59 includes three pins 62 which project upwardly from the surface of the plate 59 and which are spaced from one other by 120 degrees for insertion into jig holes 22d (refer to Figure 2a) formed in the drum cover 22 of the ball balancers 20. The plate 59 is also provided with exhausting holes 60a and through holes 60b located at positions corresponding to the positions of the oil filling holes 22c formed in the inner and outer races 22a and 22b of the drum cover 22.

The device 63 for removing residual water includes a pair of cooling water exhausting cylinders 64 and a pair of air injection cylinders 66. The exhausting cylinders 64 are located below respective exhausting holes 60a, and the air injection cylinders 66 are located below respective through holes 60b in the plate 59. Each of the air injection cylinders 66 has an air nozzle 68 which is slideable within its respective through hole 60b into contact with the underside 23 of the cover 22 surrounding the oil filling holes 22c in the ball balancer 20.

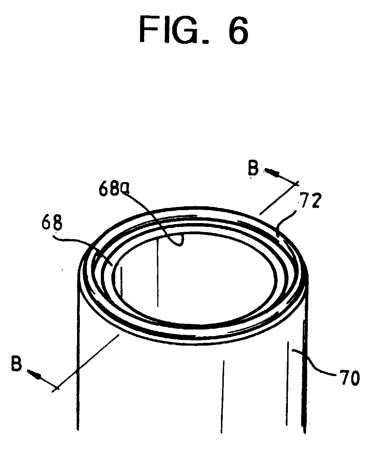

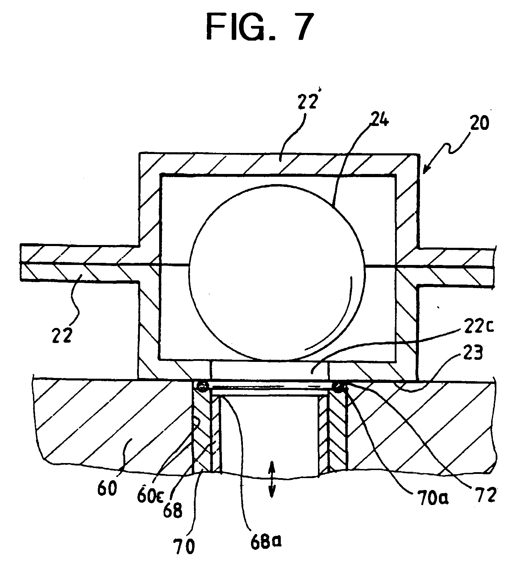

In an alternative embodiment illustrated in Figures 6 and 7 a sleeve 70 is provided to protect the air nozzle 68 and to prevent it from contacting the bottom surface 23 of the cover 22 and becoming damaged. The sleeve 70 encloses the air nozzle 68 and includes a recess 70a in its upper annular surface to receive a seal member 72 which abuts against the underside of the drum cover 22 surrounding an oil filling hole 22c and prevents leakage of air from the nozzle 68. An O-ring or rubber packing is used as the seal member 72.

The operation of the apparatus for removing residual water from the ball balancers of a drum washing machine according to the preferred embodiment of the present invention will now be described.

The drum covers 22 and 22' of the ball balancer 20 are spot-welded together following insertion of the balls 24a,24b into the races 22a,22b to hold them in position during the seam welding process. To remove residual cooling water, the ball balancer 20 is positioned on the plate 59 and rotated until the jig pins 62 protruding from the upper surface of the plate 59 enter the jig holes 22d of the cover 22 and so that the exhausting holes 60a and the through holes 60b are aligned with respective oil filling holes 22c of the inner and outer races 22a and 22b of the ball balancer 20.

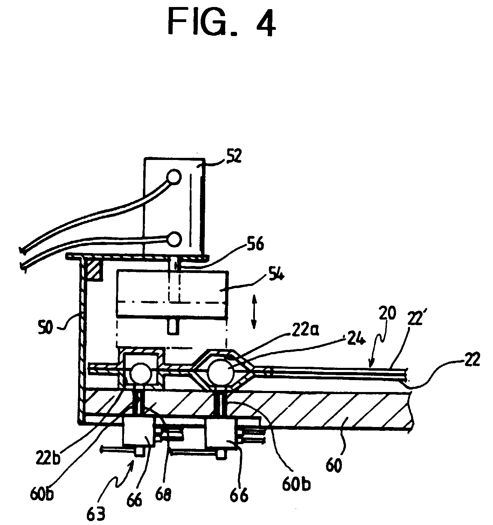

When the air cylinder 52 is operated, as shown in Figure 4, the fixing jig 54 moves downwardly along the guide bars 56' until it contacts and presses against the surface of the drum cover 22'. thereby preventing movement of the ball balancer 20 during the operation of the water removing device 63.

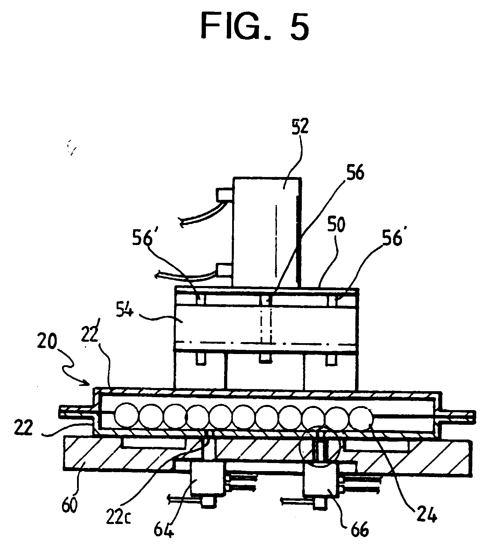

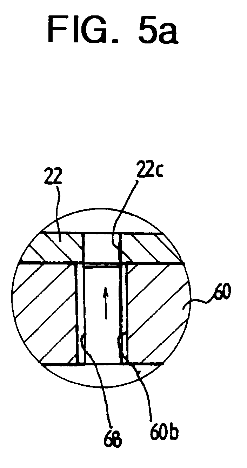

When the residual water removing device 63 is operated, as shown in Figure 5, the end portions of the air nozzles 68 of the air injection cylinders 66 are moved upwardly through their respective through-holes 60b until they contact the underside 23 of the drum cover 22 and surround the oil filling holes 22c of the inner and outer races 22a and 22b. The exhaust cylinders 64 move simultaneously into contact with the underside of the drum cover 22 and surround the holes 60a. Air is then injected into the races 22a and 22b via the nodes 68 to blow residual water in the ball balancer through the holes 22c and into the exhaust cylinders 64 which apply a vacuum to the races through the aligned holes 60a and 22c.

When the air noble configuration illustrated in Figures 6 and 7 is used, the seal member 72 of the sleeve 70 contacts the underside of the cover 22 when the air nozzles 68 slide through the through holes 60c to protect the nozzles 68 against damage and prevent leakage of air.

According to the above described embodiments, cooling water remaining in the inner and outer races and on the balls in the ball balancers can be conveniently removed by injecting air through the races via the oil filling holes to thereby prevent oxidation and rusting of the balls and ensure that vibration and noise is effectively absorbed.

In addition, leakage of air injected into the ball balancer and damage to the nozzles can be prevented by using a sleeve 70 which surrounds the nozzles 68.

Although the preferred embodiments of the invention have been described, it is understood that the present invention should not be limited to these preferred embodiments, but various changes and modifications can be made by one skilled in the art within the scope of the invention as hereinafter claimed.

## Claims

**1.** A method of expelling residual water from a counterbalancing device (20) for a drum washing machine, **characterised by** the step of passing air through the counterbalancing device (20) to blow out the residual water.

**2.** A method according to claim 1, including the step of clamping the counterbalancing device (20) in a jig (54) such that a first hole (22c) in the counterbalancing device (20) is aligned with an air nozzle (68) on the jig (54).

**3.** A method according to claim 2, including the step of applying a vacuum source (64) to the counterbalancing device (20) to draw the residual water therefrom.

**4.** A method according to claim 3, including the step of clamping the counterbalancing device (20) in the jig (54) such that the vacuum source is aligned with a second hole (22c) in the counterbalancing device (20) to enable the vacuum to draw the residual water from the counterbalancing device (20).

**5.** A method according to any of claims 2 to 4, including the step of sliding the air nozzle (68) into communication with the first hole (22c) in the counterbalancing device (20).

**6.** A method of manufacturing a counterbalancing device for a drum washing machine, **characterised by** the steps of:
a) placing counterbalance means (24a,24b) in a channel formed in a first drum cover (22);
b) laying a second drum cover (22') having a second channel over the first drum cover (22) such that the first and second channels are aligned and together form an enclosed chamber containing the counterbalance means (24a,24b);
c) seam welding the first and second drum covers (22,22') together whilst applying water to cool the drum covers (22,22');
d) expelling residual cooling water from the chamber, and
e) injecting oil into the chamber to reduce friction between the counterbalance means (24a,24b) and the chamber during operation of the counterbalance device.

**7.** A method according to claim 6, including the step of spot welding the drum covers together to hold them in position before commencing the seam welding step.

**8.** An apparatus for expelling residual water from a counterbalancing device (20) for a drum washing machine **characterised by** means for passing air through the counterbalancing device (20) to blow out the residual water.

**9.** An apparatus according to claim 8, including means for clamping the counterbalancing device (20) in a jig (54) such that a first hole (22c) in the counterbalancing device (20) is aligned with an air nozzle (68) on the jig (54).

**10.** An apparatus according to claim 9, wherein the air nozzle (68) is received in a passage (60b) in the jig (54) and is slideable into communication with the first hole (22c) in the counterbalancing device (20).

**11.** An apparatus according to claim 8 or 9, including a vacuum source (64) to draw the residual water from the counterbalancing device (20).

**12.** An apparatus according to claim 11, wherein the vacuum source (64) is aligned with a second hole (22c) in the counterbalancing device (20) to enable the vacuum to draw the residual water therefrom.

**13.** An apparatus according to any of claims 9 to 12, including a sleeve (70) surrounding the air nozzle (68) movable into sealing engagement with the counterbalancing device (20).

**14.** Apparatus for removing residual water from a ball balancer adapted for use on a drum clothes washing machine comprising positioning means for positioning a ball balancer having at least one annular race, first and second holes communicating with spaced apart portions of the race and balls disposed in the race, an air cylinder mounted to be aligned with the first hole for injecting air thereinto, the air exiting the race through the second hole; and water removing means disposed adjacent the second hole for receiving the residual water entrained in the air.

**13.** The apparatus according to claim 12 wherein the positioning means comprises a jig, and means for pressing a ball balancer downwardly against an upper surface of the jig.

**14.** The apparatus according to claim 12 wherein the positioning means comprises a jig, including at least one pin adapted to be received in a jig hole formed in the ball balancer.

**15.** The apparatus according to claim 12 wherein the positioning means comprises a jig adapted to receive a ball balancer, the jig including holes communicating with respective ones of the holes in the ball balancer, the holes in the jig being alignable with the holes of the ball balancer.

**16.** The apparatus according to claim 15 wherein the air cylinder includes a nozzle movable into the first hole of the jig.

**17.** The apparatus according to claim 16 further including a cap surrounding the nozzle and including a seal disposed on an end thereof for engaging a surface of the ball balancer.

**18.** The apparatus according to claim 17 wherein the seal comprises an O-ring.

**19.** The apparatus according to claim 12 wherein the water removing means includes means for creating a vacuum at the second hole.

**20.** A method of removing residual water from a ball balancer adapted for use on a drum clothes washing machine, the ball balancer including at least one annular race, two holes communicating with spaced apart portions of the race, and balls mounted in the race, the method comprising the step of injecting air into one of the holes and causing the air to exit the race through the other hole along with the residual water entrained therein.

**21.** The method according to claim 20 further including the step of creating a vacuum of the other hole.
